# EUROPEAN PATENT APPLICATION

(11) **EP 4 706 379 A1**
(43) Date of publication of application: **11.03.2026**
(21) Application number: 25382864.4
(22) Date of filing: 11.08.2025
(51) Int. Cl.: A01G 9/28, A01G 13/31

(54) **MODULAR GROUND PROTECTOR FOR GARDENING**

(30) Priority: 09.09.2024 ES 202431654 U
(71) Applicant: Lopez Lopez, Juan Carlos, 33759 El Franco (Asturias) (ES)
(72) Inventor: Lopez Lopez, Juan Carlos, 33759 El Franco (Asturias) (ES)
(74) Representative: Álvarez López, Sonia

(57) **Abstract**

Modular ground protector for gardening, consisting of a frame comprising a plurality of pieces arranged around a plant (P) in a garden, each piece having an inverted T-shaped cross-section, formed by a horizontal plate (1) resting on the ground from which a vertical plate (2) extends, such that the piece comprises a front area formed by the front portion (11) of the horizontal plate and the outer face (21) of the vertical plate, and a rear area formed by the rear portion (12) of the horizontal plate and the inner face (22) of the vertical plate; wherein the front portion (11) of the horizontal plate further comprises perforations (3) arranged along the contour of the front sides (13).

## Description

### Object of the Invention

The present invention relates to a new type of ground protector for gardening, consisting of a modular protector configured by a plurality of pieces arranged together to form a protective framework around a plant, such as the trunk of a tree, shrub, hedge, trellis post, or similar plant in a garden. Its purpose is to prevent grass or lawn from growing in the area enclosed by the protector. The protector of the present invention enables a user, on the one hand, to mow the lawn in a garden with any type of lawn mower available on the market, as it allows the machine to come into contact with the protector so that its blade can trim all the grass surrounding it; and, on the other hand, it improves the aesthetic appearance of the enclosed area, which can be filled with decorative elements and/or fitted with lighting elements attached to the protector.

The invention falls within the industrial sector related to the manufacture of gardening tools and devices.

### Background of the Invention

It is well known that there are difficulties in maintaining the lawn of a garden in optimal condition. One of the most common problems is the growth of grass in the area close to the trunk of a tree, shrub, hedge, or plants arranged in a garden.

Grass growth around these plants is irregular and cannot be cut with a robot or conventional lawn mower because of the gap between the machine's housing and the blades, which prevents the blades from reaching the base of the plant when the machine makes contact with it. This forces the user to cut the grass manually in the vicinity of the plant.

As mentioned above, on the one hand, growth in this area is irregular, leaving patches and bare spots that detract from the garden's appearance; on the other hand, the need for manual trimming means the user spends extra time, and the resulting cut is often inconsistent with the rest of the lawn. In addition to the extra work time required, the visual result is unsatisfactory. Consequently, many gardens leave the area around the plant as a dead zone without grass. However, unwanted weeds generally grow there, requiring manual cutting at regular intervals, with the associated inconveniences.

To solve these problems, the present invention provides a solution that prevents grass and weeds from growing in the area around the plant in a garden; allows a user to maintain the entire garden with a conventional lawn mower, where the machine can contact the protector and its blades can cut all surrounding grass; and, furthermore, allows the protector to be filled with decorative elements and/or fitted with lighting elements, improving the visual and aesthetic appearance of the area around the plant.

The applicant is not aware of any type of ground protector for gardening that is either similar to or as advantageous as that described and claimed herein.

### Summary of the Invention

The invention is a new type of ground protector for gardening, being a modular protector configured by a plurality of pieces fixed together to form a protective framework around a plant in a garden, which, in its various embodiments, addresses the problems and limitations identified in the prior art.

In greater detail, the modular ground protector for gardening of the present invention consists of a framework placed around a plant in a garden and comprising a plurality of pieces fixed together. Each piece, which may be made of a plastic material such as PVC or of sheet metal, is characterised by:
- comprising an inverted T-shaped cross-section, consisting of a horizontal plate resting on the ground from which a vertical plate extends, such that the piece comprises a front zone made up of the front part of the horizontal plate and the outer face of the vertical plate, and a rear zone made up of the rear part of the horizontal plate and the inner face of the vertical plate;
- the width of the front part of the horizontal plate may be greater than the width of the rear part;
- the height of the vertical plate may be less than the total width of the horizontal plate;
- the front part of the horizontal plate includes perforations arranged along the contour of its sides and at least one perforation along the front contour, for the passage of a fastening element anchored into the ground;
- the rear part of the horizontal plate includes a plurality of holes arranged on its surface for the passage of a fastening element anchored into the ground;
- the pieces of the protector are positioned with the sides of the horizontal plates of two adjacent pieces aligned and their vertical plates flush, such that the inner part of the framework forms a closed inner enclosure made up of the vertical plates that protect the plant; while the horizontal plate prevents grass from growing near the enclosure and allows a lawn mower to rest its wheels on the front part of the horizontal plate, contact the vertical wall, and cut the grass flush with its blades.

In one embodiment, the length of the front contour of the front part of the horizontal plate is greater than the inner contour of the rear part of the horizontal plate.

In another embodiment, longitudinally, the front and inner contours of the plate and the vertical plate are straight, such that, when fixing adjacent pieces, the plan view of the generated enclosure is a regular polygon, such as rectangular, rhomboidal, or star-shaped.

In another embodiment, longitudinally, the outer and inner contours of the plate and vertical plate are curved, such that, when fixing adjacent pieces, the plan view of the generated enclosure is a closed curve, such as circular.

In another embodiment, the vertical plate includes a plurality of perforations to attach decorative panels to its front face.

In another embodiment, the inner face of the vertical plate includes an LED-type lighting strip, which can be powered by solar panels, batteries, or the domestic power grid.

In another embodiment, the enclosure is filled with decorative stones, for example, white stones, and/or pruning waste, such as bark chippings.

In another embodiment, the upper face of the front part of the horizontal plate is covered with a grass mat to maintain the garden's aesthetic continuity.

In another embodiment, the piece includes a lateral tab on one side of the front part of the horizontal plate, with the perforations arranged on said tab; such that, in this embodiment, two adjacent pieces overlap, since the pieces are fixed together by aligning the perforations of the lateral tab of one piece with the perforations of the side of the front part of the horizontal plate of the adjacent piece, inserting a fastening element anchored into the ground, and aligning the vertical plates. This embodiment provides a more robust protector.

Taking all these aspects into account, the present invention enables the entire lawn surface of a garden to be cut with a lawn mower, allowing for more precise, faster, and more convenient cutting compared to current means, and provides a modular and versatile solution that allows interlocking shapes to decorate the area around the plant, including illuminating the plant with LED strips.

It should be noted that, throughout the description and claims, the term "comprises" and its variants do not intend to exclude other technical features or additional elements, such as the dimensions of the pieces or their material.

### Brief Description of the Figures

To complement the description and facilitate a better understanding of the characteristics of the invention, a set of figures and drawings is presented herein, in which, in an illustrative and non-limiting manner, the following is represented:

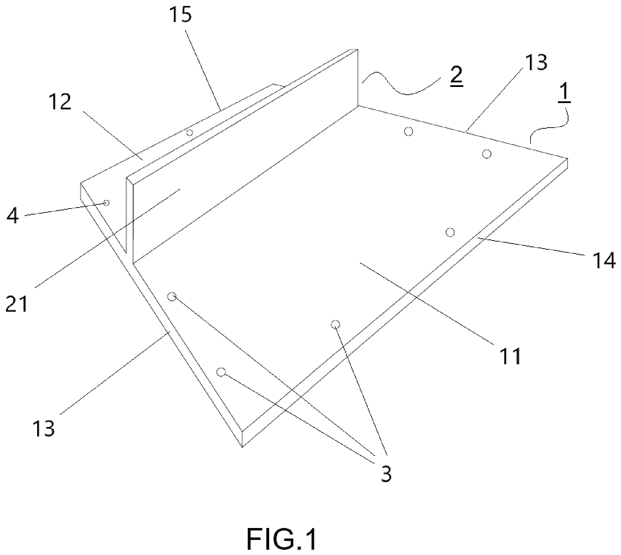

Figure 1: Perspective view of a piece of the modular ground protector for gardening.

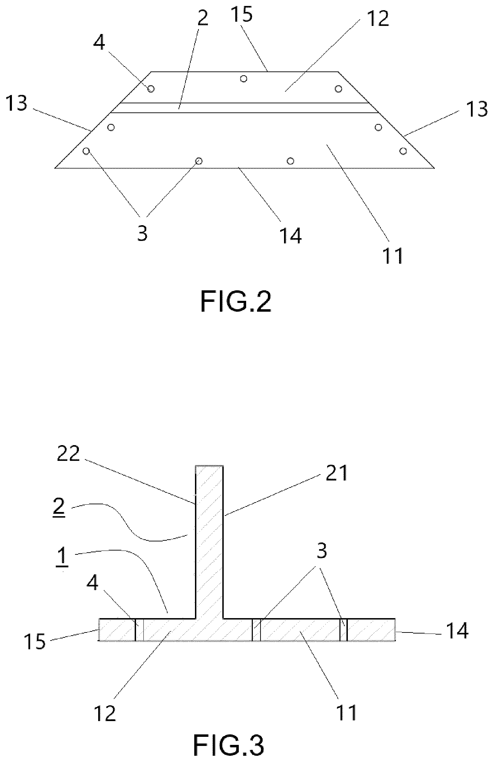

Figure 2: Top view of the piece shown in the previous figure.
Figure 3: Cross-sectional view of the previous figure.

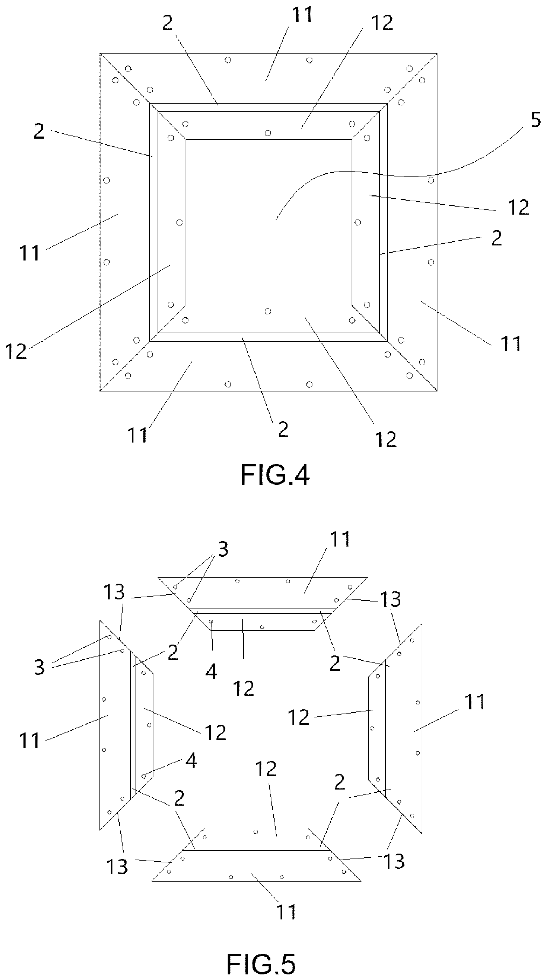

Figure 4: Top view of a modular ground protector for gardening consisting of the union of four pieces such as those of the previous figures.
Figure 5: Exploded view of the protector of the previous figure.

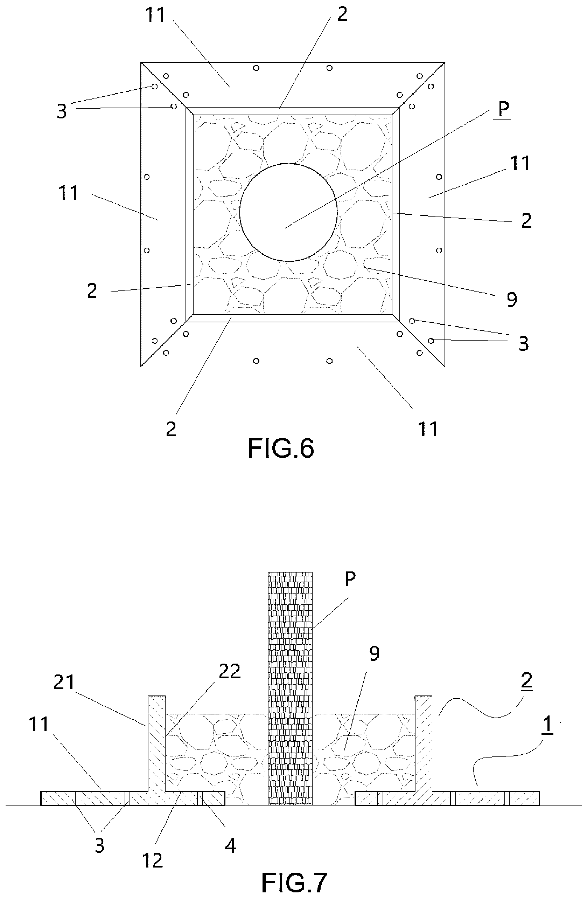

Figure 6: Top view of a modular protector surrounding the trunk of a tree, with the enclosed area filled with decorative stones.
Figure 7: Cross-sectional view of the previous figure.

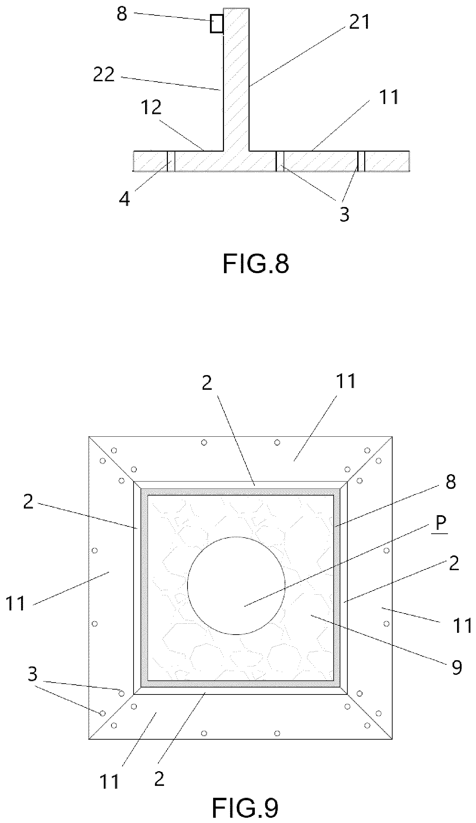

Figure 8: Sectional view of a piece of the protector comprising a lighting strip on the inner face of the vertical plate.
Figure 9: Top view of a modular protector surrounding the trunk of a tree, with the enclosed area filled with decorative stones and including lighting.

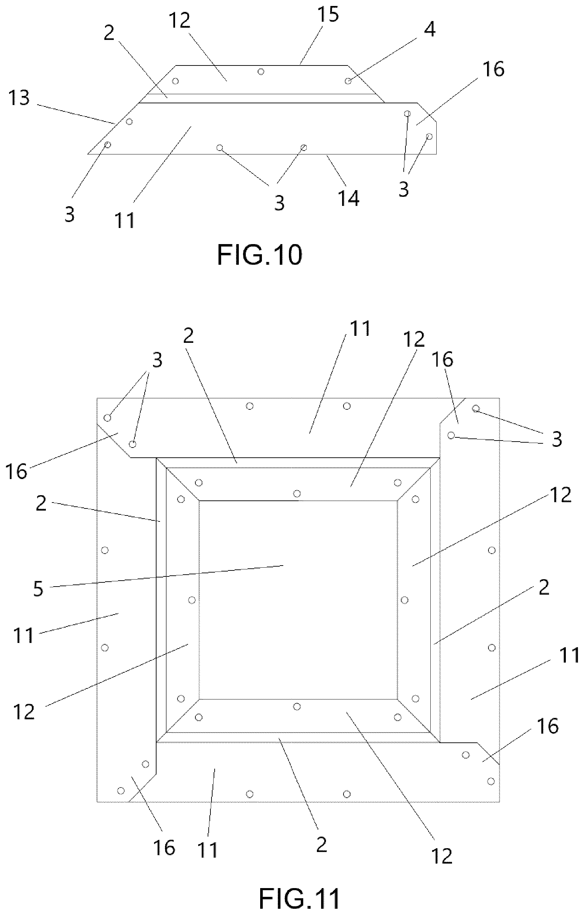

Figure 10: Top view of a piece of a protector with a lateral flange on one side of the front part of the horizontal plate.
Figure 11: Top view of a modular ground protector for gardening consisting of the union of four pieces such as those of the previous figure.

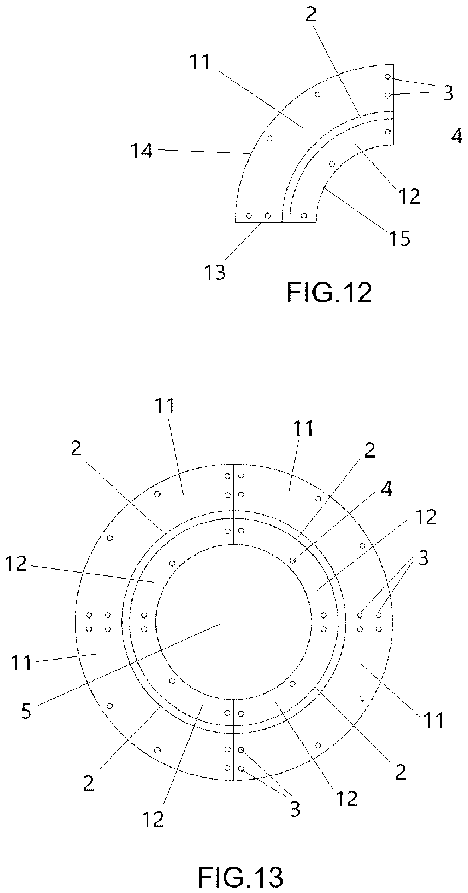

Figure 12: Top view of a piece of a protector where the outer and inner contours of the plate and vertical wall are curved.
Figure 13: Top view of a modular ground protector for gardening consisting of the union of four pieces such as those of the previous figure, where it can be seen that the generated enclosure plan is circular.

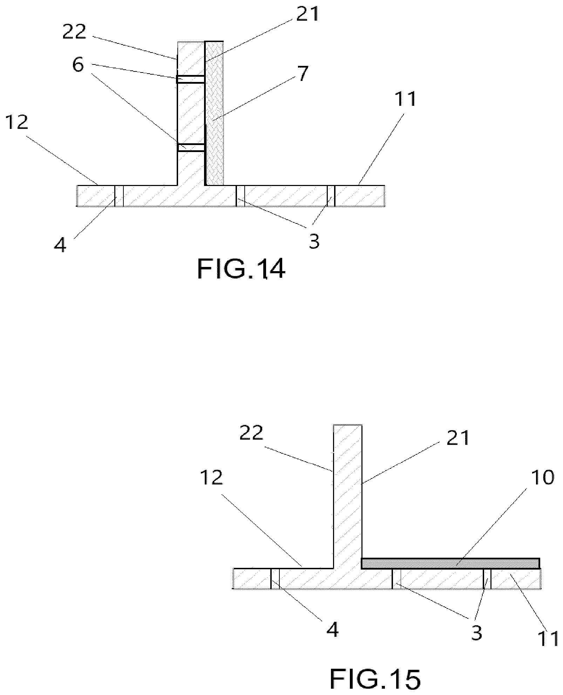

Figure 14: Cross-sectional view of a piece of a protector comprising, in the vertical wall, a plurality of perforations for fixing decorative panels on its front face.
Figure 15: Cross-sectional view of a piece of a protector where the upper face of the front part of the horizontal plate is covered by an artificial grass mat to provide aesthetic continuity to the garden.

### Detailed Description of Some Embodiments of the Invention

As can be observed in the preceding set of figures, the invention is a modular ground protector for gardening, consisting of a frame arranged around a plant (P) in a garden, comprising a plurality of pieces fixed together, each piece having the particular features of:
- comprising an inverted T-shaped cross-section, constituted by a horizontal plate (1) resting on the ground from which a vertical plate (2) extends, such that the piece comprises a front area formed by the front part (11) of the horizontal plate and the outer face (21) of the vertical plate, and a rear area formed by the rear part (12) of the horizontal plate and the inner face (22) of the vertical plate; and
- the front part of the horizontal plate comprising perforations (3) located along the outline of the front sides (13) and at least one perforation (3) in the front outline (14), for passage of an anchoring element into the ground;
- the rear part of the horizontal plate comprising a plurality of bores (4) arranged in its surface, for passage of an anchoring element into the ground;
- and the protector pieces being positioned together so that the front sides (13) of the horizontal plates of two adjacent pieces coincide in position and their vertical plates (2) are aligned, thereby forming an inner enclosure (5) inside the frame, closed and formed by the vertical plates, which protects the plant; while the horizontal plate prevents grass growth near the enclosure and allows a lawn mower to rest its wheels on the front part (11) of the horizontal plate, contact the vertical plate (2), and trim the surrounding grass closely with its blades.

In one embodiment, the width of the front part (11) of the horizontal plate is greater than the width of the rear part (12).

In one embodiment, the height of the vertical plate (2) is less than the total width of the horizontal plate (1).

In one embodiment, the length of the front outline (14) of the front part of the horizontal plate is greater than the inner outline (15) of the rear part of the horizontal plate.

In one embodiment, longitudinally, the front outline (14), the inner outline (15) of the plate, and the vertical plate (2) are straight, such that, when fixing adjacent pieces, the resulting enclosure plan is a regular polygon, such as a rectangular shape.

In one embodiment, longitudinally, the front outline (14), the inner outline (15), and the vertical plate (2) are curved, such that, when fixing adjacent pieces, the resulting enclosure plan is circular.

In one embodiment, the vertical plate (2) comprises a plurality of perforations (6) for fixing a decorative panel (7) on its outer face (21).

In one embodiment, the inner face (22) of the vertical plate comprises a LED-type lighting strip (8).

In one embodiment, the inner enclosure (5) is filled with decorative stones (9), for example, white stones.

In one embodiment, the upper face of the front part of the horizontal plate is covered by an artificial grass mat (10) to provide aesthetic continuity to the garden.

In one embodiment, the piece comprises a lateral flange (16) on one side of the front part of the horizontal plate, and the perforations (3) are arranged in said lateral flange; such that, in this embodiment, two adjacent pieces are overlapped, since the pieces are fixed together by aligning the perforations of the lateral flange of one piece with the perforations of the side of the front part of the horizontal plate of the adjacent piece, passing an anchoring element into the ground, and aligning the vertical plates.

## Claims

1. Modular ground protector for gardening, being a frame comprising a plurality of pieces arranged around a plant (P) in a garden, **characterised in that** each piece comprises a cross-section in the shape of an inverted T, constituted by a horizontal plate (1) resting on the ground from which a vertical plate (2) extends, such that the piece comprises a front area formed by the front portion (11) of the horizontal plate and the outer face (21) of the vertical plate, and a rear area formed by the rear portion (12) of the horizontal plate and the inner face (22) of the vertical plate; wherein the front portion (11) of the horizontal plate further comprises perforations (3) arranged along the contour of the front sides (13) and at least one perforation (3) along the front contour (14), said perforations allowing the passage of a through element for anchoring into the ground; wherein the rear portion (12) of the horizontal plate comprises a plurality of holes (4) arranged on its surface, for the passage of a through element for anchoring into the ground; and wherein the pieces of the protector are arranged such that the front sides (13) of the horizontal plates of two adjacent pieces coincide in position and their vertical plates (2) are aligned, such that an inner enclosure (5) is formed inside the frame, the enclosure being closed and formed by the vertical plates.

2. Modular ground protector for gardening according to claim 1, wherein the width of the front portion (11) of the horizontal plate is greater than the width of the rear portion (12).

3. Modular ground protector for gardening according to claim 1, wherein the height of the vertical plate (2) is less than the total width of the horizontal plate (1).

4. Modular ground protector for gardening according to claim 1, wherein the length of the front contour (14) of the front portion of the horizontal plate is greater than the inner contour (15) of the rear portion of the horizontal plate.

5. Modular ground protector for gardening according to claim 1, wherein, longitudinally, the front contour (14), the inner contour (15) of the horizontal plate and the vertical plate (2) are straight.

6. Modular ground protector for gardening according to claim 1, wherein, longitudinally, the front contour (14), the inner contour (15) of the horizontal plate and the vertical plate (2) are curved.

7. Modular ground protector for gardening according to claim 1, wherein the vertical plate (2) comprises a plurality of perforations (6) for securing a decorative panel (7) to its outer face (21).

8. Modular ground protector for gardening according to claim 1, wherein the inner face (22) of the vertical plate comprises a lighting strip (8).

9. Modular ground protector for gardening according to claim 1, wherein the inner enclosure (5) is filled with decorative stones (9).

10. Modular ground protector for gardening according to claim 1, wherein the upper face of the front portion (11) of the horizontal plate is protected by an artificial grass mat (10).

11. Modular ground protector for gardening according to claim 1, wherein the piece comprises a lateral tab (16) on one side of the front portion of the horizontal plate, and the perforations (3) are arranged in said lateral tab.
